# EUROPÄISCHE PATENTSCHRIFT

(11) **EP 0 471 142 B1**
(45) Veröffentlichungstag und Bekanntmachung des Hinweises auf die Patenterteilung: **23.03.1994**
(21) Anmeldenummer: 91102888.4
(22) Anmeldetag: 28.02.1991
(51) Int. Cl.: F01M 13/02, F16K 31/365

(54) **Druckregelventil für den Einbau in eine Entlüftungsleitung an einer Brennkraftmaschine**
Pressure regulating valve for the installation in a vent conduit of a combustion engine
Soupape de réglage de la pression pour l'installation dans un conduit de purge d'un moteur à combustion interne

(30) Priorität: 11.07.1990 DE 4022129
(43) Veröffentlichungstag der Anmeldung: 19.02.1992
(73) Patentinhaber: FILTERWERK MANN & HUMMEL GMBH, D-71631 Ludwigsburg (DE)
(72) Erfinder: Holch, Hans-Werner, W-7100 Heilbronn (DE)
(74) Vertreter: Voth, Gerhard, Dipl.-Ing.

(56) Entgegenhaltungen:
- DE-C- 3 032 243
- DE-U- 7 822 216
- FR-A- 908 989
- FR-A- 2 334 523
- GB-A- 974 944
- US-A- 2 986 159
- US-A- 3 485 259
- US-A- 3 744 507

## Beschreibung

Die Erfindung betrifft ein Druckregelventil für den Einbau in eine Entlüftungsleitung an einer Brennkraftmaschine gemäß dem Oberbegriff des Hauptanspruchs.

Derartige Druckregelventile werden beispielsweise in der Entlüftungsleitung zwischen Kurbelgehäuse und Ansaugrohr bzw. Luftfilter verwendet. Ein weiterer typischer Anwendungsfall ist der Einbau in die Entlüftungsleitung des Kraftstofftanks. In jedem Fall geht es darum, den Druck oder Unterdruck in den zu entlüftenden Behältern nicht über einen vorbestimmten Wert hinaus ansteigen zu lassen.

Ein aus dem DE-GM 78 22 216 bekanntes Druckregelventil enthält nur eine einzige Ventilvorrichtung mit einer Membran, die den Durchgang durch die Mündungsöffnung des Abflußkanals steuert und gegebenenfalls verschließt. Um auch schon bei verhältnismäßig geringem Unterdruck, der bei Vollastbetrieb und entsprechend geöffneter Hauptdrosselklappe im Motorsaugrohr herrscht, eine ausreichend große Gasmenge durch das Druckregelventil absaugen zu können, muß die Mündungsöffnung des Abflußkanals entsprechend reichlich bemessen sein. Tritt nun ein höherer Unterdruck im Motorsaugrohr, beispielsweise durch Schließen der Hauptdrosselklappe auf, so übt dieser Unterdruck bei geschlossenem Druckregelventil eine erhebliche Kraft über die Mündungsöffnung des Abflußkanals auf die Membran aus.

Ein Kompensieren dieser Kraft wäre nur durch eine entsprechend kräftig ausgebildete Ventilfeder möglich. Dies hätte aber zur Folge, daß die Membran einen unerwünscht großen Durchmesser haben müßte, um auch bei weniger großen Unterdrücken ihrer Regelfunktion nachkommen zu können. Deshalb war die Verwendung des bekannten Druckregelventils nur dann möglich, wenn sich die Schwankungen des zum Entlüften erforderlichen Unterdrucks in Grenzen hielten.

Aus der DE-PS 30 32 243 ist ein weiteres Druckregelventil bekannt, welches versucht, diesen Nachteil zu vermeiden. Dieses Ventil arbeitet mit zwei parallel geschalteten Membranen, welche jeweils mit einer Feder belastet sind, wobei jede Feder bzw. jede Membran derart bemessen ist, daß bei einem bestimmten Unterdruck zunächst das Ventil geschlossen wird, welches die größere Ventilöffnung aufweist und bei einem noch höheren Unterdruck auch das zweite Ventil, welches eine geringere Ventilöffnung aufweit, geschlossen wird. Damit funktioniert dieses Ventil auch bei erheblichen Schwankungen des zum Entlüften benutzten Unterdrucks.

Der Erfindung liegt die Aufgabe zugrunde, ausgehend von dem bekannten Stand der Technik ein Druckregelventil zu schaffen, welches auch bei großen Schwankungen des Unterdrucks, welcher als Steuerdruck wirkt, einen möglichst konstanten Druck in dem zu entlüftenden Raum zu schaffen, unter besonderer Berücksichtung eines kompakten und einfachen Aufbaus.

Diese Aufgabe wird ausgehend von dem Oberbegriff des Hauptanspruchs durch dessen kennzeichnenden Merkmale gelöst.

Wesentlicher Vorteil der Erfindung ist die Verknüpfung zweier Ventile für unterschiedliche Drücke, wobei beide Ventile an der einzigen Membran angeordnet sind und trotzdem ein einfacher und montagefreundlicher Aufbau des gesamten Druckregelventils erzielt wird.

Die konstruktiv gestalteten Teile des Ventils sind beispielsweise aus Kunststoffspritzguß hergestellt. Damit ist es möglich, solche Ventile kostengünstig und in großen Stückzahlen zu fertigen.

Der erfindungsgemäße Aufbau ist vor allem auch geeignet, mit großer Genauigkeit die Ventilfunktion einzustellen, d. h. die Bemessung der bei den in dem Ventil angeordneten Druckfedern sowie die Ventilöffnungen sind auf jeden speziellen Anwendungsfall zugeschnitten.

Gemäß einer Weiterbildung der Erfindung befindet sich das Zwischenventil in einem hohlzylindrischen Teil. Dieses hohlzylindrische Teil bildet gleichzeitig den Anschlag für die axiale Beweglichkeit des Zwischenventils. Außerdem wird eine radiale Führung des konzentrisch zu der Membran angeordneten Zwischenventils erreicht.

In einer weiteren Ausgestaltung der Erfindung ist vorgesehen, an der Membran einen topfförmigen Stützkörper anzuordnen. Dieser Stützkörper bildet die Anlageflächen sowohl für die Druckfedern als auch für das hohlzylindrische Teil, welches das Zwischenventil fixiert.

Durch die Zwischenschaltung eines Stützkörpers ist gewährleistet, daß die Membran, welche beispielsweise aus einem gummiähnlichen Material hergestellt ist, vor Beschädigungen, beispielsweise durch die Feder, geschützt ist.

Die Erfindung wird nachfolgend anhand eines Ausführungsbeispiels näher erläutert. Es zeigt:
- Figur 1: einen Schnitt durch ein Druckregelventil bei geöffneten Ventilen,
- Figur 2: das in Figur 1 gezeigte Druckregelventil mit geschlossenem ersten Ventil,
- Figur 3: das in Figur 1 gezeigte Druckregelventil in völlig geschlossenem Zustand.

Im praktischen Betrieb wird durch das in die Entlüftungsleitung zwischen dem Saugrohr und dem Kurbelgehäuse der Brennkraftmaschine eingebaute Druckregelventil Durchblasgas in Pfeilrichtung hindurchgesaugt. Dabei wird die Forderung gestellt, daß während des Betriebs im Kurbelgehäuse immer ein geringer Unterdruck vorherrschen soll, damit keine Durchblasgase beispielsweise durch die Entlüftungsleitung nach außen gelangen und die Umwelt verschmutzen können.

Andererseits besteht die Forderung, daß der angegebene Unterdruckwert nicht wesentlich unterschritten wird, weil sonst durch Undichtigkeiten ungewollt Staub in das Kurbelgehäuse gesaugt würde.

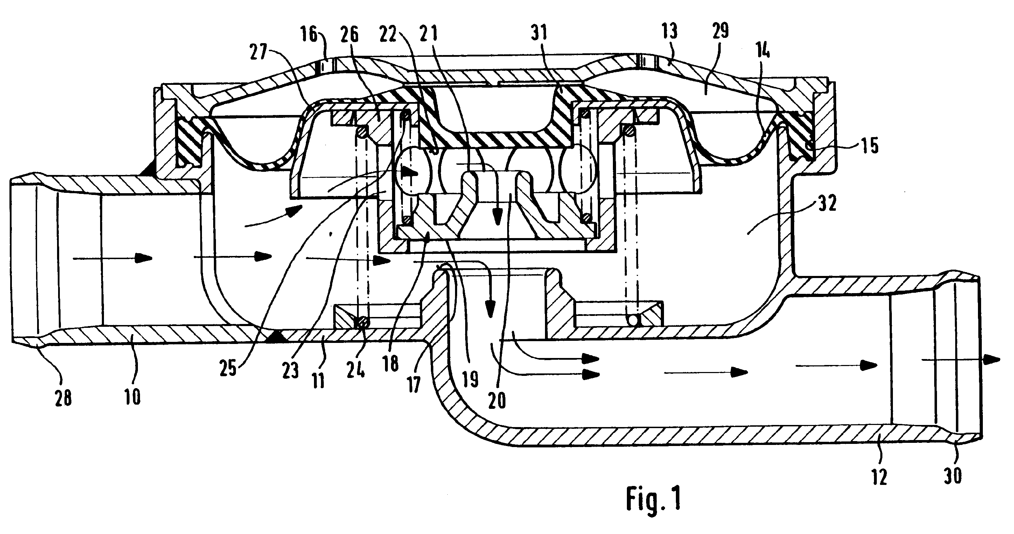

Ein Druckregelventil, welches für den Einbau in die Entlüftungsleitung zwischen dem Saugrohr und dem Kurbelgehäuse einer Brennkraftmaschine bestimmt ist, besteht gemäß Figur 1 aus einem Ventilgehäuse 11, welches einen Zuflußstutzen 10 aufweist. Dieser Zuflußstutzen ist an seinem äußeren Ende mit einem Ringwulst 28 versehen, so daß ein Schlauch oder ähnliches angeschlossen werden kann. Der Zuflußstutzen ist koaxial zu dem Ventilgehäuse 11 in dasselbe geführt und schließt innerhalb des Ventilgehäuses 11 mit einem Ventilsitz 17 ab.

Das Ventilgehäuse 11 ist nach oben offen und enthält an seiner oberen Öffnung eine Ringnut 15. Auf dieser Öffnung des Ventilgehäuses 11 wird ein Gehäusedeckel 13 befestigt, wobei zwischen Gehäusedeckel 13 und Ventilgehäuse 11 eine Membran 14 eingelegt ist. Die Membranfläche dieser Membran ist in ihrem mittleren Teil verdickt und weist in diesem Bereich eine ventilplattenförmige Fläche 22 auf, welche dem Ventilgehäuse zugewandt ist.

Zwischen Membran 14 und Gehäusedeckel 13 wird eine erste Ventilkammer 29 gebildet, welche über eine Belüftungsbohrung 16 mit dem atmosphärischen Außendruck in Verbindung steht. Das Ventilgehäuse 11 weist ferner einen Abflußstutzen 12 auf. Auch dieser Abflußstutzen 12 ist mit einem Ringwulst 30 zum Anschluß eines Schlauches versehen.

Der mittlere Bereich der Membran 14 wird durch einen Stützkörper 27 abgestützt bzw. schützt die Membran vor den dort auf die Membran einwirkenden Teilen. An diesen Stützkörper 27 ist ein hohlzylindrisches Teil 26 angelegt. Dieses kann sowohl starr mit dem Stützkörper verbunden sein, als auch als ein einzelnes Element augestaltet sein.

An einem ringförmigen Kragen des hohlzylindrischen Teils 26 liegt eine Druckfeder 25 an. Diese Druckfeder 25 stützt sich mit ihrem gegenüberliegenden Ende an dem Ventilgehäuse ab. Durch die Druckfeder wird die Membran in eine obere Endstellung bewegt. In dieser Endstellung liegt die Membran im Bereich ihrer Verdickung 31 an dem Gehäusedeckel 13 an.

Innerhalb des hohlzylindrischen Teils 26 befindet sich ein Zwischenventil 18. Dieses Zwischenventil 18 ist mit einer Ventilplatte 19 und mit einem Ventilsitz 21 versehen. Außerdem hat das Zwischenventil 18 eine Ventilöffnung 20 mit einem bestimmten Durchmesser, welcher kleiner als der Durchmesser des Ventilsitzes 17 ist.

Das Zwischenventil 18 wird von einer Druckfeder 24 im Ruhezustand in der dargestellten Lage gehalten. Durch dieses Zwischenventil werden in dem Druckregelventil zwei unterschiedlich wirkende Ventile gebildet, und zwar ein Ventil bestehend aus Ventilplatte 19 und Ventilsitz 17 und ein Ventil mit Ventilplatte 22 und Ventilsitz 21.

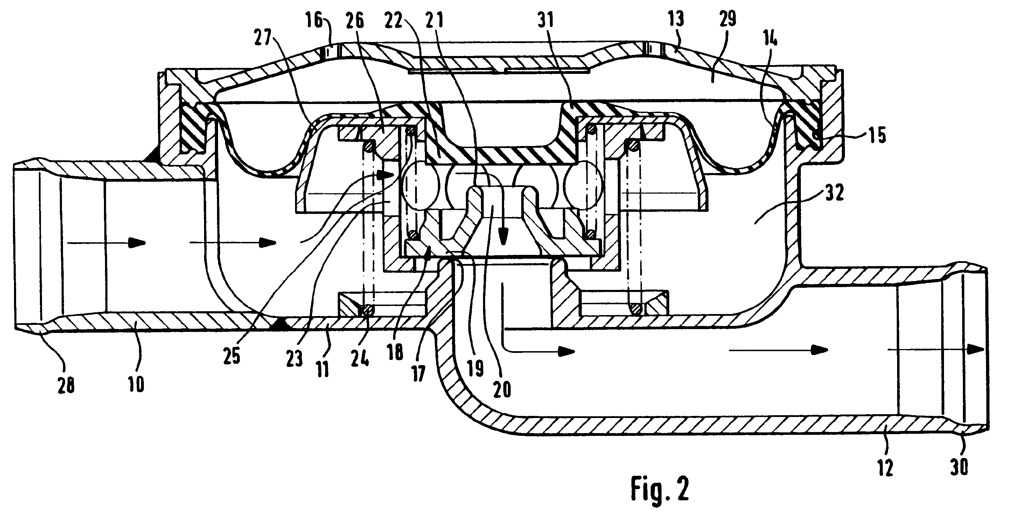

Das hohlzylindrische Teil 26 ist mit Durchbrüchen 23 versehen. Die Funktion der Durchbrüche wird anhand der Figur 2 näher erläutert.

In der in Figur 1 gezeigten Stellung werden die in einem Kurbelgehäuse sich bildenden Gase, welche über den Zuflußstutzen 10 einströmen, über den Abflußstutzen 12 abgesaugt, wobei beide Ventile geöffnet sind. Diese Ventilstellung ist wirksam, wenn der Saugrohrunterdruck sehr gering ist bzw. nahezu kein Saugrohrunterdruck herrscht. In dieser Stellung kann der größtmögliche Durchsatz an Durchblasgasen auch bei geringem Saugrohrunterdruck erzielt werden.

In Figur 2 ist das in Figur 1 beschriebene Druckregelventil wiederum dargestellt. Das Druckregelventil befindet sich nunmehr in einer Zwischenstellung. Diese Stellung wird dann erreicht, wenn ein bestimmt er Grenzwert des Saugrohrunterdruckes sich eingestellt hat und wobei dieser Grenzwert oberhalb des maximal in dem Kurbelgehäuse zulässigen Unterdrucks liegt.

Bei Unterschreiten eines festgelegten Druckwertes, der niedriger als der Atmosphärendruck ist, bewegt sich die in Figur 1 in Ruhestellung gezeigte Membran 14 und damit die Ventilplatte 19 auf den Ventilsitz 17 zu, und zwar mit fallendem Druck, bis der Durchgang durch dieses Ventil bei Unterschreiten des Grenzwertes in der Ventilkammer 32 gegen die Kraft der Druckfeder 25 schließlich absperrt.

In diesem Zustand wirkt der an dem Abflußstutzen 12 angelegte Unterdruck, der bei geschlossener Hauptdrosselklappe der Brennkraftmaschine beispielsweise bis zu 800 mbar erreichen kann, über die Ventilöffnung 20 auf die Membran 14. Die Durchblasgase strömen nunmehr über die Durchbrüche 23 durch diese Ventilöffnung 20 gemäß den eingezeichneten Pfeilen.

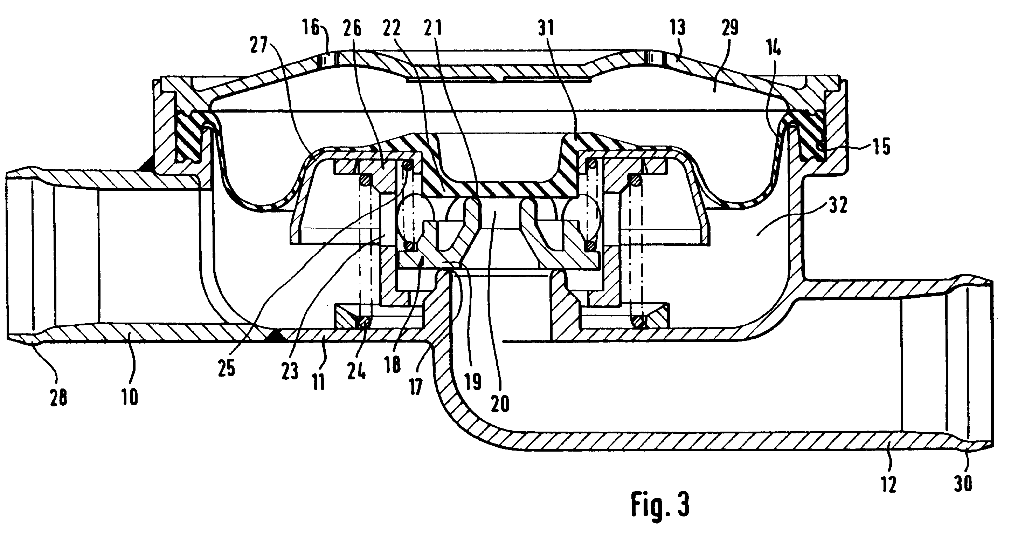

Entsteht ein noch höherer Druck im Saugrohr, so wird sich gemäß Figur 3 die Membran entgegen der Federkraft der Druckfeder 24 weiter nach unten bewegen, bis bei einem maximalen Saugrohrunterdruck der Bereich der Ventilplatte 22 der Membran 14 an dem Ventilsitz 21 anliegt und damit auch diese Öffnung verschließt. In dieser Stellung gelangen keine Durchblasgase mehr von dem Kurbelgehäuse in das Saugrohr. Sobald sich jedoch in dieser gezeigten Stellung der Druck im Kurbelgehäuse erhöht bzw. der Saugrohrunterdruck erniedrigt, wird sich die Membran wieder von dem Ventilsitz 21 des Zwischenventils 18 abheben und damit zunächst die kleinere Öffnung und bei einem weiteren Abfallen des Saugrohrunterdrucks, beispielsweise durch Öffnen der Hauptdrosselklappe, der Unterdruck in dem Saugrohr der Brennkraftmaschine verringert, so daß schließlich auch die größere Öffnung, d. h. das Ventil zwischen dem Ventilsitz 17 und der Ventilplatte 19 geöffnet wird.

### Bezugszeichenliste

- 10: Zuflußstutzen
- 11: Ventilgehäuse
- 12: Abflußstutzen
- 13: Gehäusedeckel
- 14: Membran
- 15: Ringnut
- 16: Belüftungsbohrung
- 17: Ventilsitz
- 18: Zwischenventil
- 19: Ventilplatte
- 20: Ventilöffnung
- 21: Ventilsitz
- 22: Ventilplatte
- 23: Durchbrüche
- 24: Druckfeder
- 25: Druckfeder
- 26: hohlzylindrisches Teil
- 27: Stützkörper
- 28: Ringwulst
- 29: Ventilkammer
- 30: Ringwulst
- 31: Verdickung
- 32: Ventilkammer

## Patentansprüche

1. Druckregelventil für den Einbau in eine Entlüftungsleitung an einer Brennkraftmaschine insbesondere zwischen Kurbelgehäuse und Ansaugrohr bzw. Luftfilter mit einem Ventilgehäuse, das aus einem topfförmigen Gehäuseunterteil und einem Gehäusedeckel zusammengesetzt ist, mit einem in das Gehäuseunterteil einmündenden Zuflußstutzen und einem aus dem Gehäuseunterteil ausmündenden Abflußstutzen, dessen zentral innerhalb des Ventilgehäuses angeordnetes Stutzenende als Ventilsitz ausgebildet ist, sowie mit einem an seinem Rand in einer Nut zwischen dem Gehäusedeckel und dem Gehäuseunterteil abgedichtete eingeklemmten Membranventilkörper, der das Ventilgehäuse in eine Ventilkammer und eine über einen Belüftungskanal mit der Atmosphäre verbunde Belüftungskammer unterteilt, wobei die Membran eine dem Ventilsitz am Stutzenende zugewandte Ventilplatte aufweist und mit einer Druckfeder, welche sich an dem Boden des Gehäuseunterteils abstützt und eine Kraft auf die Membran in Richtung des Gehäusedeckels ausübt, dadurch gekennzeichnet, daß zwischen der Ventilplatte der Membran und dem ersten Ventilsitz am Gehäuseunterteil ein Zwischenventil angeordnet ist, welches einen zweiten Ventilsitz aufweist, der der Membran zugewandt ist und mit der Ventilplatte der Membran zusammenwirkt und eine Ventilplatte aufweist, welche dem Ventilsitz des Gehäuseunterteils zugewandt ist und mit diesem zusammenwirkt, wobei das Zwischenventil an der Membran derart angeordnet ist, daß eine axiale Relativbewegung zwischen der Membran und dem Zwischenventil möglich ist.

2. Druckregelventil nach Anspruch 1, dadurch gekennzeichnet, daß an der Membran ein hohlzylindrisches Teil angeordnet ist, welches an seinem Mantel mit Durchbrüchen versehen ist und in welchem das Zwischenventil angeordnet ist.

3. Druckregelventil nach einem der vorhergehenden Ansprüche, dadurch gekennzeichnet, daß zwischen der Membran und dem Zwischenventil eine Druckfeder angeordnet ist, welche im Ruhezustand das von dem Zwischenventil und der Ventilplatte der Membran gebildete zweite Ventil offenhält.

4. Druckregelventil nach einem der vorhergehenden Ansprüche, dadurch gekennzeichnet, daß an der Membran ein topfförmiger Stützkörper angeordnet ist, welcher im Bereich der Ventilplatte der Membran einen Durchbruch aufweist und an welchem sich die erste und die zweite Druckfeder abstützen.

5. Druckregelventil nach einem der vorhergehenden Ansprüche, dadurch gekennzeichnet, daß bei einem Saugrohrunterdruck bis zu einem ersten Grenzwert das aus der Ventilplatte des Zwischenventils und dem ersten Ventilsitz gebildete Ventil schließt und das bei einem bestimmten festgelegten höheren Grenzwert des Saugrohrunterdrucks auch das aus dem zweiten Ventilsitz und der Ventilplatte der Membran gebildete Ventil schließt und damit den Unterdruck in dem zu entlüftenden Raum, insbesondere dem Kurbelgehäuse begrenzt.

## Claims

1. Pressure regulating valve for installation in an air vent duct of an internal combustion engine, more especially for installation between the crank housing and induction manifold or air filter, including a valve housing which comprises a cup-shaped lower housing portion and a housing cover, a feed pipe extending into the lower housing portion, a discharge pipe extending from the lower housing portion, the end of said discharge pipe disposed centrally internally of the valve housing being provided as the valve seat, a diaphragm valve body which is clamped in a sealed manner at its edge in a groove between the housing cover and the lower housing portion and divides the valve housing into a valve chamber and an air inlet chamber communicating with the atmosphere via an air inlet duct, the diaphragm having a valve plate facing the valve seat at the pipe end, and a compression spring which is supported on the base of the lower housing portion and exerts a force upon the diaphragm in the direction of the housing cover, characterised in that an intermediate valve is disposed between the valve plate of the diaphragm and the first valve seat on the lower housing portion, said intermediate valve having a second valve seat which faces the diaphragm, co-operates with the valve plate of the diaphragm and has a valve plate which faces the valve seat of the lower housing portion and co-operates therewith, the intermediate valve being disposed on the diaphragm in such a manner that an axial relative movement between the diaphragm and the intermediate valve is possible.

2. Pressure regulating valve according to claim 1, characterised in that a hollow-cylindrical member is disposed on the diaphragm and is provided with openings on its surface, and the intermediate valve is disposed in said member.

3. Pressure regulating valve according to one of the preceding claims, characterised in that a compression spring is disposed between the diaphragm and the intermediate valve and, in its position of rest, keeps open the second valve which is formed from the intermediate valve and the valve plate of the diaphragm.

4. Pressure regulating valve according to one of the preceding claims, characterised in that a cup-shaped support member is disposed on the diaphragm and has an opening in the region of the valve plate of the diaphragm, the first and second compression springs being supported on said support member.

5. Pressure regulating valve according to one of the preceding claims, characterised in that, when the induction manifold has a reduced pressure up to a first limit value, the valve formed from the valve plate of the intermediate valve and the first valve seat closes, and in that, when the reduced pressure in the induction manifold has a predetermined fixed higher limit value, the valve formed from the second valve seat and the valve plate of the diaphragm also closes and thereby limits the reduced pressure in the area to be vented, more especially the crank housing.

## Revendications

1. Soupape de régulation de pression pour montage dans une conduite de dégazage d'un moteur à combustion interne, en particulier entre le carter du vilebrequin et la tubulure d'aspiration ou le filtre à air, comprenant :
- un boîtier de soupape, constitué d'une partie inférieure en forme de pot, fermée par un couvercle,
- une tubulure d'entrée, arrivant à la partie inférieure du boîtier et une tubulure de sortie partant de la partie inférieure du boîtier et dont l'extrémité, située au centre du boîtier de soupape, constitue un siège de soupape
- un corps de soupape à membrane dont le bord est serti dans une rainure entre la partie inférieure et le couvercle du boîtier et qui divise le boîtier de soupape en une chambre de soupape et une chambre de dégazage reliée à l'atmosphère par un canal de dégazage,
- un clapet de soupape porté par la membrane, en regard du siège de soupape situé à l'extrémité de la tubulure et sur lequel un ressort de pression, prenant appui sur le fond de la partie inférieure du boîtier, agit et exerce ainsi sur la membrane une poussée en direction du couvercle.
caractérisée en ce qu'entre le clapet de la membrane et le premier siège de soupape de la partie inférieure du boîtier, est intercalée une soupape intermédiaire jouant le rôle de deuxième soupape faisant face à la membrane et comportant un clapet en regard du siège de soupape de la partie inférieure de boîtier et coopérant avec lui, la soupape intermédiaire étant disposée par rapport à la membrane, de manière à permettre un mouvement relatif axial entre la membrane et la soupape intermédiaire.

2. Soupape de régulation de pression selon la revendication 1, caractérisée en ce que la membrane porte une pièce cylindrique creuse dont la paroi est percée d'ouvertures et dans laquelle est montée la soupape intermédiaire.

3. Soupape de régulation de pression selon une des revendications précédentes, caractérisée en ce qu'entre la membrane et la soupape intermédiaire est intercalé un ressort de pression qui, au repos, maintient ouvert la deuxième soupape constituée de la soupape intermédiaire et du clapet porté par la membrane.

4. Soupape de régulation de pression selon une des revendications précédentes, caractérisée en ce que la membrane est équipée d'un support de forme creuse, présentant dans la zone du clapet de soupape porté par la membrane, une ouverture, le premier et le second ressort de pression prenant appui sur le support.

5. Soupape de régulation de pression selon une des revendications précédentes, caractérisée en ce que lorsque la dépression d'aspiration ne dépasse pas une certaine limite, la soupape constituée par le clapet de la soupape intermédiaire et le premier siège de soupape se ferme tandis qu'à partir d'une autre valeur limite de la dépression d'aspiration supérieure à la première, la soupape constituée par le second siège et le clapet de la membrane se ferme également, limitant ainsi la dépression dans le volume à dégazer, en particulier le carter de vilebrequin.
